# EUROPEAN PATENT SPECIFICATION

(11) **EP 1 847 439 B1**
(45) Date of publication and mention of the grant of the patent: **15.12.2010**
(21) Application number: 06008270.8
(22) Date of filing: 21.04.2006
(51) Int. Cl.: B62B 7/10

(54) **Foldable stroller**
Faltbarer Kinderwagen
Poussette pliante

(43) Date of publication of application: 24.10.2007
(73) Proprietor: Wonderland Nurserygoods Co., Ltd., Taipei (TW)
(72) Inventor: Chen, Shun-Min, Neihu Taipei (TW)
(74) Representative: Kahlhöfer, Hermann

(56) References cited:
- EP-A- 1 170 192
- EP-A2- 0 239 367
- EP-B1- 0 027 374
- FR-A1- 2 394 434
- US-A- 6 062 587

## Description

The invention relates to a foldable stroller, more particularly to a foldable stroller having retaining means for retaining a slide of a locking unit at an unlockingposition so as to facilitate folding operation of the stroller.

U.S. Patent Nos. 6,062,587 and 5,775,718 disclose strollers according to the preamble of claim 1 that are foldable. Locking means are normally provided in the conventional foldable strollers for preventing undesired folding of stroller frame parts in a state of use. When it is desired to fold the stroller frame parts, the locking means are unlocked. Hence, how the locking means can be conveniently unlocked without interfering folding of the stroller is an important issue in the industry.

Therefore, the object of the present invention is to provide a foldable stroller with retaining means that can prevent undesired folding of the stroller as well as prevent undesired interference of locking means during folding of the stroller.

This object is solved by a foldable stroller as defined in claim 1.

Accordingly, a foldable stroller comprises: a pivot unit including a pivot seat that has an upper end provided with a first interlocking member and a first stop member; a stroller frame including a lower rod having an upper end that is fixed to the pivot seat, and an upper rod having a lower end that is pivoted to the pivot seat so as to be rotatable relative to the lower rod about a rotation axis; and a locking unit mounted movably on the upper rod, and including a slide that is provided with a second interlocking member and a second stop member, and that is movable on the upper rod relative to the pivot seat in an axial direction transverse to the rotation axis between a first axial position, in which the second interlocking member engages the first interlocking member so as to prevent rotation of the upper rod about the rotation axis, and a second axial position, in which the second interlocking member is disengaged from the first interlocking member so as to permit rotation of the upper rod about the rotation axis, and in which the second stop member abuts against the first stop member in the axial direction so as to prevent axial movement of the slide from the second axial position to the first axial position.

Other features and advantages of the present invention will become apparent in the following detailed description of the preferred embodiments with reference to the accompanying drawings, of which:
Fig. 1 is a schematic side view of the first preferred embodiment of a foldable stroller according to this invention;
Fig. 2 is a perspective view of the first preferred embodiment in an unfolded state;
Fig. 3 is a schematic side view of the first preferred embodiment in a folded state;
Fig. 4 is a fragmentary side view to illustrate how first and second interlocking members and first and second stop members of the first preferred embodiment are operated to engage or disengage each other;
Fig. 5 is a fragmentary partly sectional view to illustrate a state where the slide of the first preferred embodiment is disposed at a first axial position;
Fig. 6 is a fragmentary sectional view to illustrate another state where the slide of the first preferred embodiment is disposed at a second axial position;
Fig.7 is a fragmentary sectional view to illustrate yet another state where an upper rod is rotated relative to a lower rod of the first preferred embodiment toward a folded position;
Fig. 8 is a fragmentary sectional view to illustrate still another state where the upper rod is rotated relative to the lower rod of the first preferred embodiment toward an unfolded position;
Fig. 9 is a fragmentary perspective view of the second preferred embodiment of the foldable stroller according to this invention; and
Fig. 10 is a fragmentary sectional view to illustrate how the slide of the second preferred is operated to move from a first axial position to a second axial position.

Before the present invention is described in greater detail with reference to the accompanying preferred embodiments, it should be noted herein that like elements are denoted by the same reference numerals throughout the disclosure.

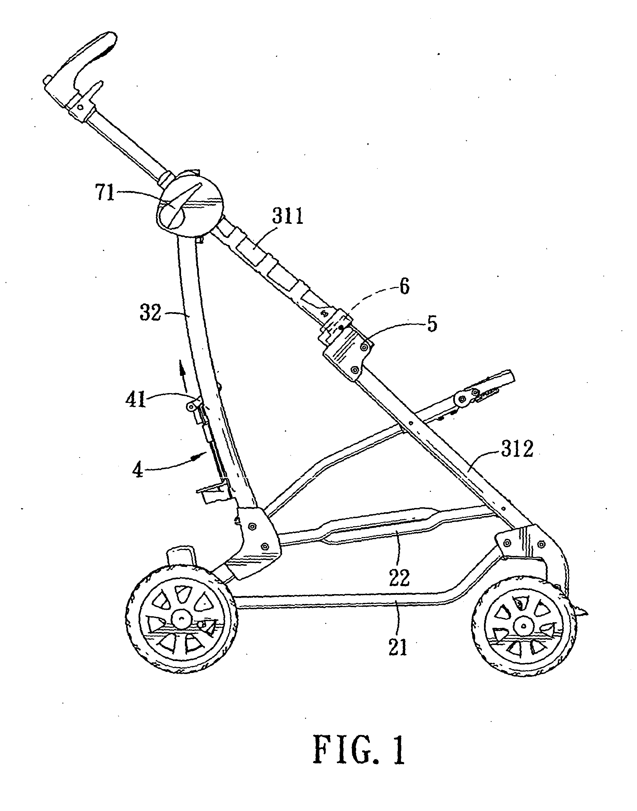

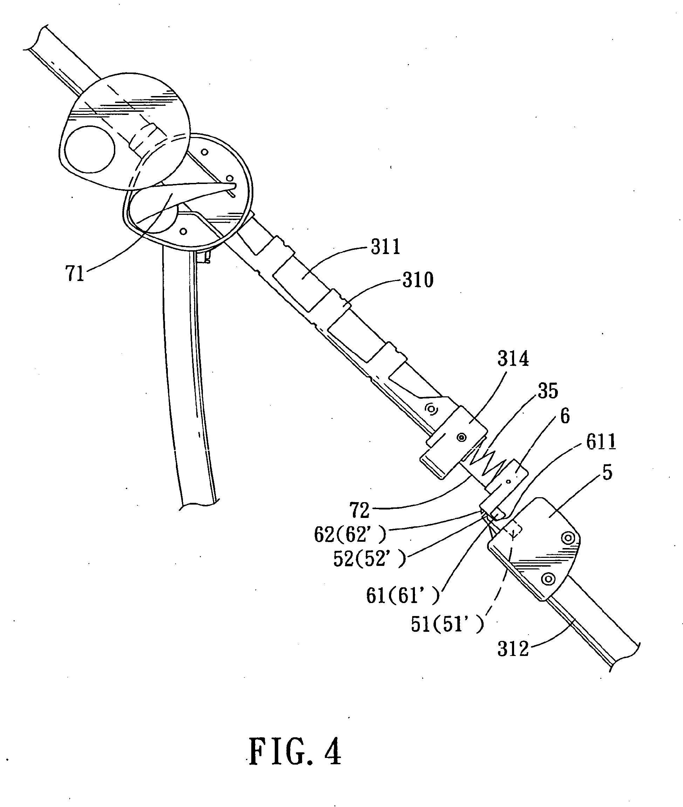

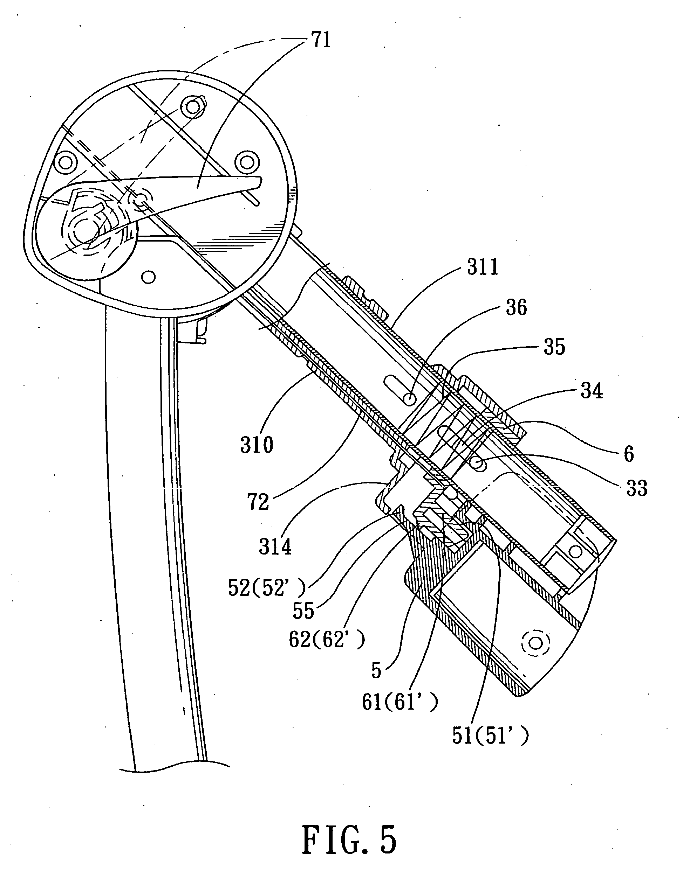

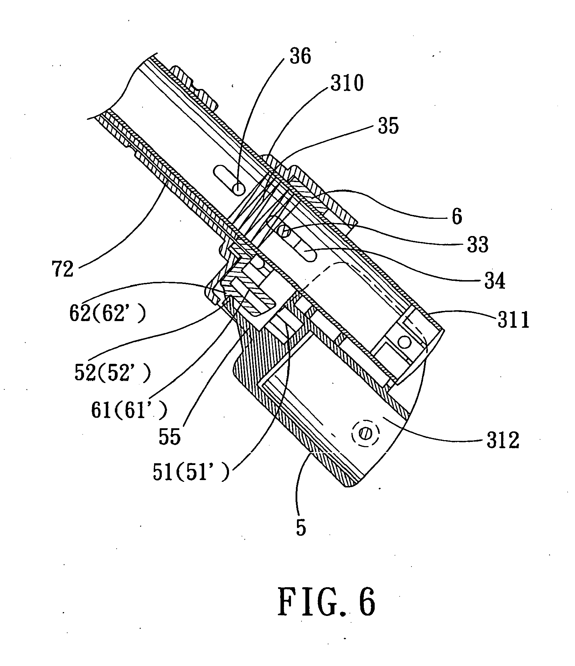

Referring to Figures 1 to 4, the first preferred embodiment of a foldable stroller according to the present invention is shown to include: a pair of pivot units, each of which includes a pivot seat 5 that has an upper end provided with a first interlocking member 51 and a first stop member 52; a stroller frame including a pair of lower rods 312, each of which has an upper end that is fixed to the pivot seat 5 of a respective one of the pivot units, and a pair of upper rods 311, each of which has a lower end that is pivoted to the pivot seat 5 of a respective one of the pivot units so as to be rotatable relative to a respective lower rod 312 about a rotation axis; and a locking unit mounted movably on one of the upper rods 311, and including a slide 6 that is provided with a second interlocking member 61 and a second stop member 62, and that is movable on the respective upper rod 311 relative to a respective pivot seat 5 in an axial direction transverse to the rotation axis between a first axial position (see Fig. 5), in which the second interlocking member 61 engages the first interlocking member 51 so as to prevent rotation of the upper rod 311 about the rotation axis, and a second axial position (see Fig. 6), in which the second interlocking member 61 is disengaged from the first interlocking member 51 so as to permit rotation of the upper rod 311 about the rotation axis, and in which the second stop member 62 abuts against the first stop member 52 in the axial direction so as to prevent axial movement of the slide 6 from the second axial position to the first axial position.

Since each of the left components of the foldable stroller, such as the left one of the upper rods 311 and the left one of the pivot units, has the same structure as the corresponding one of the right components of the foldable stroller, such as the right one of the upper rods 311 and the right one of the pivot units, only one set of the components will be described in the following detailed description.

In this embodiment, the upper end of the pivot seat 5 is formed with a recess 51' that defines the first interlocking member 51. The slide 6 is sleeved on the upper rod 311, and is formed with a stud 61' protruding therefrom in the axial direction and defining the second interlocking member 61. The stud 61' extends into the recess 51' when the slide 6 is disposed at the first axial position, and is disposed outwardly of the recess 51' when the slide 6 is disposed at the second axial position.

The upper end of the pivot seat 5 is further formed with an arm 55 extending therefrom in the axial direction and having a free end. The free end of the arm 55 is formed with a first protrusion 52' that protrudes radially therefrom and that defines the first stop member 52. The slide 6 is further formed with a second protrusion 62' that protrudes radially from the stud 61' and that defines the second stop member 62. The second protrusion 62' is disposed below and is spaced apart from the first protrusion 52' when the slide 6 is disposed at the first axial position, and is disposed above and abuts against the first protrusion 52' when the slide 6 is disposed at the second axial position.

The upper rod 311 is formed with a slot 34. The locking unit further includes a first pin 33 projecting from the slide 6 through the slot 34 so as to permit sliding movement of the slide 6 on the upper rod 311, a second pin 36 extending into the upper rod 311 and disposed above the slot 34, and an urging member 35 having two opposite ends respectively abutting against the first and second pins 33, 36 for urging the slide 6 toward the first axial position.

The foldable stroller further includes a pair of operating units, each of which includes an operating lever 71 mounted rotatably on the upper rod 311, and a string 72 connected to the operating lever 71 and the slide 6 so as to move the slide 6 from the first axial position to the second axial position upon operation of the operating lever 71.

In this embodiment, a sleeve 310 is sleeved on the upper rod 311, and has an enlarged lower open end 314. The slide 6 extends into the lower open end 314. The string 72 has a portion sandwiched between the sleeve 310 and the upper rod 311.

The first protrusion 52' is generally trapezoidal in shape, and has an inclined guiding face, and the second protrusion 62' is generally triangular in shape, and has an inclinedguiding face that slides over the inclined guiding face of the first protrusion 52' during movement of the slide 6 from the first axial position to the second axial position.

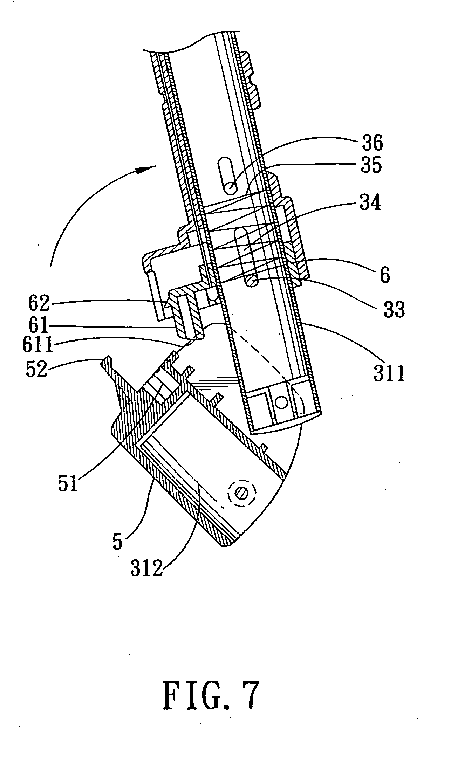

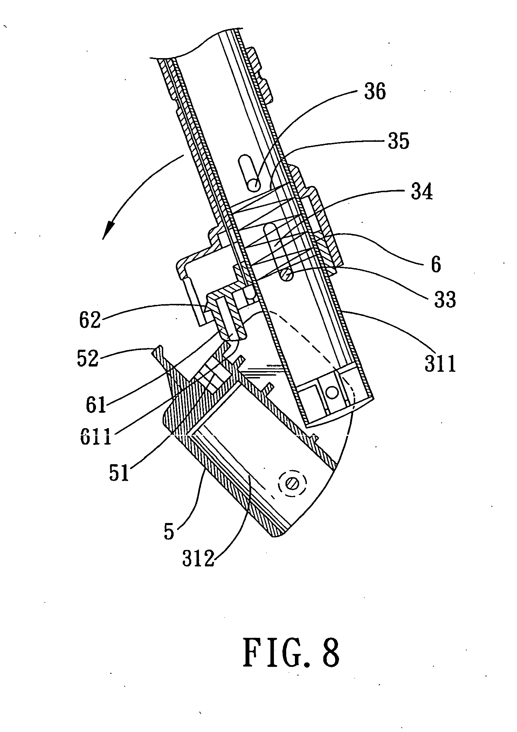

The stud 61' has an inclined guiding end face 611 for guiding movement of the upper rod 311 from a folded state (see Fig. 7) to a non-folded state (see Fig. 8).

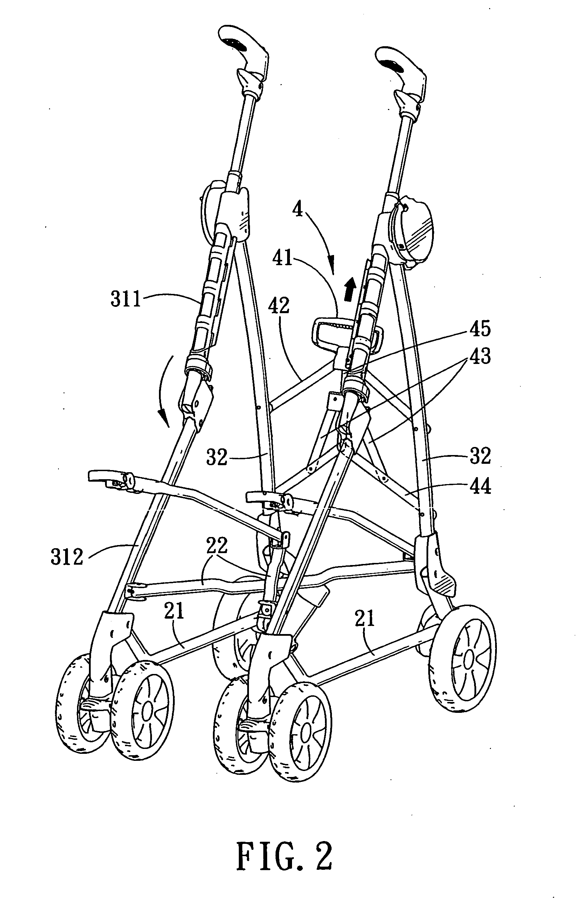

The stroller frame further includes a pair of rear rods 32 connected respectively to and extending downwardly from the upper rods 311, a pair of lower stretching rods 21 connected respectively to lower ends of the lower rods 312 and lower ends of the rear rods 32, a pair of upper stretching rods 22 crossing each other and connected to the rear rods 32 and the lower rods 312, and a stretch unit 4 connected to the rear rods 32. The stretch unit 4 is foldable, and includes a pair of upper links 42 pivoted to each other and pivoted to the rear rods 32, a pair of lower links 44 pivoted to each other and pivoted to the rear rods 32, and a pair of middle links 43 pivoted respectively to the lower links 44 and pivoted to a connecting link 45 that is pivoted to the upper links 42. An operating handle 41 is connected to the upper links 42 for folding and stretching the stretch unit 4. It is noted that, referring to Fig. 2, in combination with Fig. 5, when the slide 6 is disposed at the first axial position, undesired pulling of the stretch unit 4 will not result in folding of the upper rods 311.

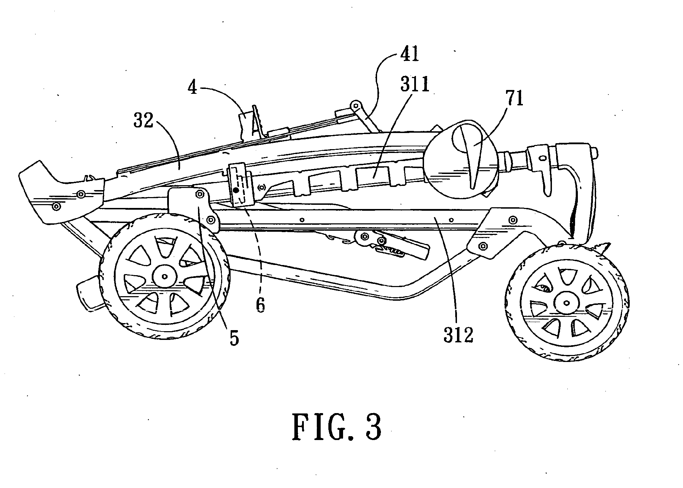

Referring to Figs. 5 to 7, when it is desired to fold the foldable stroller, the operating lever 71 is rotated upwardly so as to move the slide 6 from the first axial position to the second axial position, which results in compression of the urging member 35, sliding movement of the second stop member 62 over the first stop member 52, and abutting engagement between the first and second stop members 52,62, thereby retaining the slide 6 at the second axial position. At this state, the upper rods 311 can be rotated relative to the lower rods 312 toward the folded state (see Fig. 3) without holding the operating lever 71 to maintain the slide 6 at the second axial position. During the folding operation, the operating handle 41 is pulled upwardly so as to permit folding of the stretch unit 4 and so as to permit folding of the left set of the rear rods 32 and the upper and lower rods 311, 312 toward the right set of the rear rods 32 and the upper and lower rods 311, 312.

It is noted that during extension of the foldable stroller from the folded position to the unfolded position (see Fig. 8), by virtue of the inclined guiding end face 611 of the stud 61' and the urging action of the urging member 35, the stud 61' can slide smoothly over the upper end of the pivot seat 5 toward the recess 51' and then into the recess 51' when the slide 6 is moved to the second axial position.

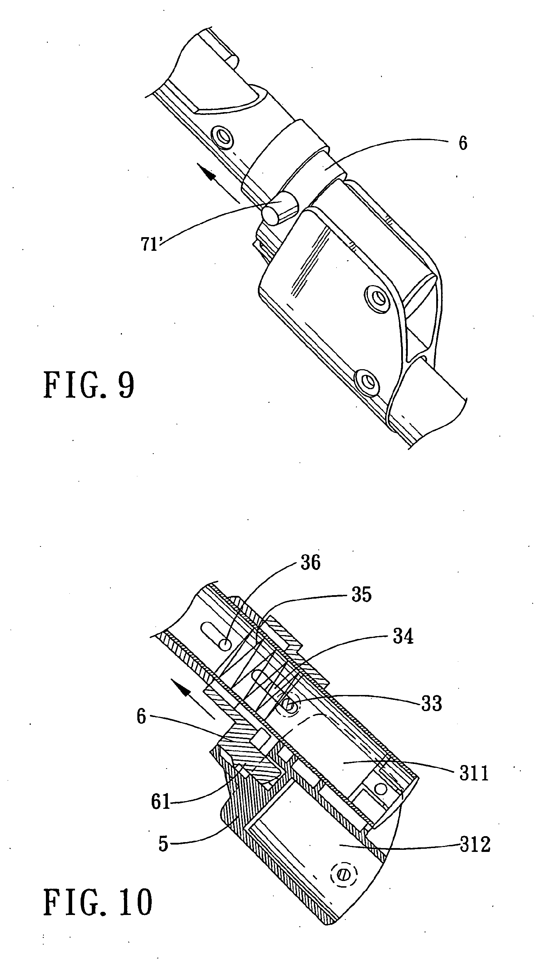

Figs. 9 and 10 illustrate the second preferred embodiment of the foldable stroller according to this invention. The foldable stroller of this embodiment differs from the previous embodiment in that the operating unit solely includes an operating lever 71' projecting from the slide 6 so that the slide 6 can be directly moved from the first axial position to the second axial position through the operating lever 71' without the string 72 of the previous embodiment.

With the inclusion of the stud 61' and the recess 51' in the foldable stroller of this invention, undesired folding of the foldable stroller can be prevented. Moreover, with the inclusion of the first and second stop members 52, 62 in the foldable stroller of this invention, the slide 6 together with the second interlocking member 61 is retained at the second axial position, thereby preventing interference of the second interlocking member 61 at the beginning of folding operation of the stroller, and thereby facilitating subsequent folding operation of the stroller.

## Claims

1. A foldable stroller comprising:
a pivot unit including a pivot seat (5) that has an upper end provided with a first interlocking member (51) ;
a stroller frame including a lower rod (312) having an upper end that is fixed to said pivot seat (5), and an upper rod (311) having a lower end that is pivoted to said pivot seat (5) so as to be rotatable relative to said lower rod (312) about a rotation axis; and
a locking unit mounted movably on said upper rod (311), and including a slide (6) that is provided with a second interlocking member (61), and that is movable on said upper rod (311) relative to said pivot seat (5) in an axial direction transverse to the rotation axis between a first axial position, in which said second interlocking member (61) engages said first interlocking member (51) so as to prevent rotation of said upper rod (311) about said rotation axis, and a second axial position, in which said second interlocking member (61) is disengaged from said first interlocking member (51) so as to permit rotation of said upper rod (311) about said rotation axis;
**characterized in that** said pivot unit further includes a first stop member (52), said locking unit further including a second stop member (62) that abuts against said first stop member (52) in the axial direction so as to prevent axial movement of said slide (6) from the second axial position to the first axial position; and
said first stop member (52) has a first inclined guiding face and said second stop member (62) has a second inclined guiding face that is in sliding contact with said inclined guiding face of said first stop member (52) during movement of said slide (6) from the first axial position to the second axial position.

2. The foldable stroller as claimed in Claim 1, wherein said upper end of said pivot seat (5) is formed with a recess (51') that defines said first interlocking member (51), said slide (6) being sleeved on said upper rod (311) and being formed with a stud (61') protruding there from in the axial direction and defining said second interlocking member (61), said stud (61') extending into said recess (51') when said slide (6) is disposed at the first axial position, and being disposed outwardly of said recess (51') when said slide (6) is disposed at the second axial position.

3. The foldable stroller as claimed in Claim 2, wherein said upper end of said pivot seat (5) is formed with an arm (55) extending therefrom in the axial direction and having a free end, said free end of said arm (55) being formed with a first protrusion (52') that protrudes radially therefrom and that defines said first stop member (52), said stud (61') being formed with a second protrusion (62') that protrude radially therefrom and that defines said second stop member (62), said second protrusion (62') being disposed below and being spaced apart from said first protrusion (52') when said slide (6) is disposed at the first axial position, and being disposed above and abutting against said first protrusion (52') when said slide (6) is disposed at the second axial position.

4. The foldable stroller as claimed in Claim 1, wherein said locking unit includes an urging member (35) for urging said slide (6) toward the first axial position.

5. The foldable stroller as claimed in Claim 4, wherein said upper rod (311) is formed with a slot (34), said locking unit further including a first pin (33) projecting from said slide (6) through said slot (34), and a second pin (36) extending into said upper rod (311) and disposed above said slot (34), said urging member (35) having two opposite ends respectively abutting against said first and second pins (33, 36).

6. The foldable stroller as claimed in Claim 1, further comprising an operating unit that includes an operating lever (71) mounted rotatably on said upper rod (311), and a string (72) connected to said operating lever (71) and said slide (6) so as to move said slide (6) from the first axial position to the second axial position upon operation of said operating lever (71).

7. The foldable stroller as claimed in Claim 6, further comprising a sleeve (310) sleeved on said upper rod (311) and having an enlarged lower open end (314), said slide (6) extending into said lower open end (314), said string (72) having a portion sandwiched between said sleeve (310) and said upper rod (311).

8. The foldable stroller as claimed in Claim 3, wherein said first protrusion (52') is generally trapezoidal in shape, said second protrusion (62') being generally triangular in shape.

9. The foldable stroller as claimed in Claim 1, wherein said slide (6) is provided with an operating lever (71') protruding therefrom.

## Patentansprüche

1. Klappbarer Kinderwagen mit
einer Schwenkeinheit mit einem Schwenksitz (5), der ein oberes Ende hat, das mit einem ersten eingreifenden Element (51) versehen ist,
einem Kinderwagenrahmen, der einen unteren Stab (312) mit einem oberen Ende, das am Schwenksitz (5) befestigt ist, und einen oberen Stab (311) mit einem unteren Ende aufweist, das zum Schwenksitz (5) geschwenkt ist, so dass es bezüglich des unteren Stabs (312) um eine Rotationsachse drehbar ist, und
einer Verriegelungseinheit, die beweglich am oberen Stab (311) montiert ist und ein Gleitstück (6) aufweist, das mit einem zweiten eingreifenden Element (61) versehen ist und am oberen Stab (311) bezüglich des Schwenksitzes (5) in einer axialen Richtung quer zur Rotationsachse zwischen einer ersten axialen Position, in der das zweite eingreifende Element (61) das erste eingreifende Element (51) in Eingriff nimmt, um eine Drehung des oberen Stabs (311) um die Rotationsachse zu verhindern, und einer zweiten axialen Position beweglich ist, in der das zweite eingreifende Element (61) aus dem ersten eingreifenden Element (51) ausgerückt ist, um eine Drehung des oberen Stabs (311) um die Rotationsachse zu gestatten,
**dadurch gekennzeichnet, dass** die Schwenkeinheit ferner ein erstes Anschlagelement (52) aufweist, wobei die Verriegelungseinheit ferner ein zweites Anschlagelement (62) aufweist, das am ersten Anschlagelement (52) in der axialen Richtung anschlägt, um eine axiale Bewegung des Gleitstücks (6) aus der zweiten axialen Position in die erste axiale Position zu verhindern, und
das erste Anschlagelement (52) eine erste geneigte Führungsfläche hat und das zweite Anschlagelement (62) eine zweite geneigte Führungsfläche hat, die während der Bewegung des Gleitstücks (6) aus der ersten axialen Position in die zweite axiale Position im Gleitkontakt mit der geneigten Führungsfläche des ersten Anschlagelements (52) ist.

2. Klappbarer Kinderwagen nach Anspruch 1, wobei das obere Ende des Schwenksitzes (5) mit einer Aussparung (51') ausgebildet ist, die das erste eingreifende Element (51) definiert, wobei das Gleitstück (6) hülsenartig auf den oberen Stab (311) aufgeschoben und mit einem Bolzen (61') ausgebildet ist, der in der axialen Richtung davon vorragt und das zweite eingreifende Element (61) definiert, wobei sich der Bolzen (61') in die Aussparung (51') erstreckt, wenn das Gleitstück (6) in der ersten axialen Position angeordnet ist, und außerhalb der Aussparung (51') angeordnet ist, wenn das Gleitstück (6) in der zweiten axialen Position angeordnet ist.

3. Klappbarer Kinderwagen nach Anspruch 2, wobei das obere Ende des Schwenksitzes (5) mit einem Arm (55) ausgebildet ist, der sich davon in der axialen Richtung erstreckt und ein freies Ende hat, wobei das freie Ende des Arms (55) mit einem ersten Vorsprung (52') ausgebildet ist, der radial davon vorragt und das erste Anschlagelement (52) definiert, wobei der Bolzen (61') mit einem zweiten Vorsprung (62') ausgebildet ist, der radial davon vorragt und das zweite Anschlagelement (62) definiert, wobei der zweite Vorsprung (62') unter dem ersten Vorsprung (52') angeordnet und von diesem beabstandet ist, wenn das Gleitstück (6) in der ersten axialen Position angeordnet ist, und über dem ersten Vorsprung (52') angeordnet ist und gegen diesen anschlägt, wenn das Gleitstück (6) in der zweiten axialen Position angeordnet ist.

4. Klappbarer Kinderwagen nach Anspruch 1, wobei die Verriegelungseinheit ein Drängelement (35) aufweist, um das Gleitstück (6) zur ersten axialen Position zu drängen.

5. Klappbarer Kinderwagen nach Anspruch 4, wobei der obere Stab (311) mit einem Schlitz (34) ausgebildet ist, wobei die Verriegelungseinheit ferner einen ersten Stift (33), der vom Gleitstück (6) durch den Schlitz (34) vorsteht, und einen zweiten Stift (36) aufweist, der sich in den oberen Stab (311) erstreckt und über dem Schlitz (34) angeordnet ist, wobei das Drängelement (35) zwei entgegengesetzte Enden hat, die jeweils am ersten und zweiten Stift (33, 36) anschlagen.

6. Klappbarer Kinderwagen nach Anspruch 1, ferner mit einer Betätigungseinheit, die einen Betätigungshebel (71), der drehbar am oberen Stab (311) montiert ist, und ein Seil (72) aufweist, das mit dem Betätigungshebel (71) und dem Gleitstück (6) verbunden ist, um das Gleitstück (6) bei Betätigung des Betätigungshebels (71) aus der ersten axialen Position in die zweite axiale Position zu bewegen.

7. Klappbarer Kinderwagen nach Anspruch 6, ferner mit einer Hülse (310), die auf den oberen Stab (311) aufgeschoben ist und ein verbreitertes unteres offenes Ende (314) hat, wobei sich das Gleitstück (6) in das untere offene Ende (314) erstreckt und das Seil (72) einen Abschnitt hat, der zwischen der Hülse (310) und dem oberen Stab (311) liegt.

8. Klappbarer Kinderwagen nach Anspruch 3, wobei der erste Vorsprung (52') allgemein trapezförmig ist und der zweite Vorsprung (62') allgemein dreieckig ist.

9. Klappbarer Kinderwagen nach Anspruch 1, wobei das Gleitstück (6) mit einem Betätigungshebel (71') versehen ist, der davon vorragt.

## Revendications

1. Poussette pliante comprenant :
une unité pivotante comprenant un siège pivotant (5) doté d'une extrémité supérieure pourvue d'un premier élément d'interverrouillage (51) ;
un châssis de poussette comprenant une tige inférieure (312) dotée d'une extrémité supérieure fixée audit siège pivotant (5) et une tige supérieure (311) dotée d'une extrémité inférieure pivotée en direction dudit siège pivotant (5) de façon à pouvoir tourner par rapport à ladite tige inférieure (312) autour d'un axe de rotation ; et
une unité de verrouillage fixée de façon mobile sur ladite tige supérieure (311) et comprenant un coulisseau (6) qui est pourvu d'un second élément d'interverrouillage (61) et qui est mobile sur ladite tige supérieure (311) par rapport audit siège pivotant (5) dans une direction axiale transversale par rapport à l'axe de rotation, entre une première position axiale dans laquelle ledit second élément d'interverrouillage (61) engrène ledit premier élément d'interverrouillage (51) de façon à empêcher ladite tige supérieure (311) de tourner autour dudit axe de rotation et une seconde position axiale dans laquelle ledit second élément d'interverrouillage (61) est désengrené dudit premier élément d'interverrouillage (51) de façon à permettre à ladite tige supérieure (311) de tourner autour dudit axe de rotation ;
**caractérisée en ce que** :
ladite unité pivotante comprend en outre un premier élément de butée (52), ladite unité de verrouillage comprenant en outre un second élément de butée (62) qui bute contre ledit premier élément de butée (52) dans la direction axiale de façon à empêcher le mouvement axial dudit coulisseau (6) de la seconde position axiale à la première position axiale ; et
ledit premier élément de butée (52) a une première face de guidage inclinée et ledit second élément de butée (62) a une seconde face de guidage inclinée qui est en contact coulissant avec ladite face de guidage inclinée dudit premier élément de butée (52) pendant le déplacement dudit coulisseau (6) de la première position axiale à la seconde position axiale.

2. Poussette pliante selon la revendication 1, dans laquelle ladite extrémité supérieure dudit siège pivotant (5) est formée avec un renfoncement (51') qui définit ledit premier élément d'interverrouillage (51), ledit coulisseau (6) étant emmanché sur ladite tige supérieure (311) et étant formé avec un crampon (61') ressortant à cet endroit dans la direction axiale et définissant ledit second élément d'interverrouillage (61), ledit crampon (61') s'étendant dans ledit renfoncement (51') lorsque ledit coulisseau (6) est disposé au niveau de la première position axiale et étant disposé vers l'extérieur dudit renfoncement (51') lorsque ledit coulisseau (6) est disposé au niveau de la seconde position axiale.

3. Poussette pliante selon la revendication 2, dans laquelle ladite extrémité supérieure dudit siège pivotant (5) est formée avec un bras (55) ressortant à cet endroit dans la direction axiale et ayant une extrémité libre, ladite extrémité libre dudit bras (55) étant formée avec une première saillie (52') qui ressort à cet endroit dans le plan radial et qui définit ledit premier élément de butée (52), ledit crampon (61') étant formé avec une seconde saillie (62') qui ressort dans le plan radial à cet endroit et qui définit ledit second élément de butée (62), ladite seconde saillie (62') étant disposée en dessous et étant séparée de ladite première saillie (52') lorsque ledit coulisseau (6) est disposé au niveau de la première position axiale, et étant disposé au-dessus et butant contre ladite première saillie (52') lorsque ledit coulisseau (6) est disposé au niveau de la seconde position axiale.

4. Poussette pliante selon la revendication 1, dans laquelle ladite unité de verrouillage comprend un élément de poussée (35) pour pousser ledit coulisseau (6) en direction de ladite première position axiale.

5. Poussette pliante selon la revendication 4, dans laquelle ladite tige supérieure (311) est formée avec une fente (34), ladite unité de verrouillage comprenant en outre une première broche (33) ressortant dudit coulisseau (6) à travers ladite fente (34) et une seconde broche (36) s'étendant dans ladite tige supérieure (311) et disposée au-dessus de ladite fente (34), ledit élément de poussée (35) ayant deux extrémités opposées butant respectivement contre lesdites première et seconde broches (33, 36).

6. Poussette pliante selon la revendication 1, comprenant en outre une unité d'actionnement qui comprend un levier d'actionnement (71) fixé de façon pivotante sur ladite tige supérieure (311) et une corde (72) reliée audit levier d'actionnement (71) et audit coulisseau (6) de façon à déplacer ledit coulisseau (6) de la première position axiale à la seconde position axiale lors de l'actionnement dudit levier d'actionnement (71).

7. Poussette pliante selon la revendication 6, comprenant en outre un manchon (310) emmanché sur ladite tige supérieure (311) et ayant une extrémité ouverte (314) inférieure élargie, ledit coulisseau (6) s'étendant dans ladite extrémité ouverte (314) inférieure, ladite corde (72) ayant une partie intercalée entre ledit manchon (310) et ladite tige supérieure (311).

8. Poussette pliante selon la revendication 3, dans laquelle ladite première saillie (52') est généralement de forme trapézoïdale, ladite seconde saillie (62') étant quant à elle généralement de forme triangulaire.

9. Poussette pliante selon la revendication 1, dans laquelle ledit coulisseau (6) est pourvu d'un levier d'actionnement (71') ressortant à cet endroit.
